# EUROPEAN PATENT APPLICATION

(11) **EP 2 063 134 A1**
(43) Date of publication of application: **27.05.2009**
(21) Application number: 07022840.8
(22) Date of filing: 26.11.2007
(51) Int. Cl.: F16B 12/00, F16B 12/40, F16B 21/02

(54) **Metal pipe furniture connecting assembly**

(71) Applicant: Matthew Comfort Co. Ltd., Taiwan, R.O.C. 521 (TW)
(72) Inventor: Yang, Chen En, Changhua (TW)
(74) Representative: Reinhardt, Thomas Johannes

(57) **Abstract**

The present invention relates to a metal pipe furniture connecting assembly and more particularly to a design of an assembly having pipe joints (10) and pipe plug sleeves (24), such that cylindrical pipes (30) and pipe joints (10) can be assembled quickly by a simple rotating insertion.
The pipe joint includes a long flat cylindrical peg (14). The plug sleeve (24) has a rhombus sheathing hole (31) having a long diameter slightly larger than the long diameter of the peg (14), and a short diameter slightly smaller than the long diameter of the peg (14).
The plug sleeve (24) has a slot (31) cut with respect to the long diameter of the sheathing hole, such that two pressing plates (43) extend along the direction of the short diameter. A latch slot (31) concavely disposed on a side of the pipe (30), proximate to a distal end of said pipe (30), allows the positioning of the plug sleeve (24) and the pipe (30) and controls the rotation of the pipe (30) by using a tool (50).

## Description

### BACKGROUND OF THE INVENTION

### Field of the Invention

The present invention relates to a metal pipe furniture connecting assembly, and more particularly to a design of an assembly having pipe joints and pipe plug sleeves, such that pipes and pipe joints can be assembled quickly by a simple rotating insertion without using any screws or bolts for its fixation, and thus the invention not only provides a simple and quick installation, but also makes the appearance more artistic since there is no screw at all. The invention can overcome existing shortcomings of the prior art, and provides excellent industrial applications and excellent practicability.

### Description of the Related Art

In general, the manufacture of traditional metal pipe furniture usually assembles its pipes and support posts by welding to produce furniture with a fixed shape. Since the manufacture relies on the experience and skill of the operator to maintain the manufacturing quality, and the fixed volume of the furniture also causes a big issue for the transportation, and thus such metal pipe furniture is eliminated gradually from the market and replaced by the do-it-yourself (DTY) sectional metal pipe furniture.

In the structural design of traditional sectional metal pipe furniture, a pipe joint is generally provided for assembling pipes and support posts to form a basic frame of the metal pipe furniture, and then shelves or panels arc installed to the frame to produce the metal pipe furniture. Since the pipe joints, pipes and support stands are fixed by screwing or inserting removable screws and bolts, it is not necessary to assemble the whole furniture before shipping out from a factory, so as to reduce the packaging volume and transportation cost. Consumers can assemble the pipe joints, pipes and support posts simply and conveniently by an appropriate securing operation in a simple and convenient after they purchase the furniture.

However, this type of sectional metal pipe furniture adopts screwing method for the assembly without any skill, and the whole assembling process is relatively complicated and time-consuming, particularly the screw bolts are small accessories and thus the packaging requires an additional bag for containing the screws. The prior art not only involve an inconvenient assembling, but also has the problem of facing the situation when there is a shortage of screw bolts. Installation cannot be completed without screw bolts, and thus consumers have to purchase substitute items for assembling the sectional metal pipe furniture. Obviously, the prior art requires improvements.

### Summary of the invention

In view of the foregoing shortcomings of the prior art, the inventor of the present invention based on years of experience in the related industry to conduct extensive researches and experience, and finally developed a metal pipe furniture connecting assembly in accordance with the present invention.

The primary objective of the present invention is to overcome the shortcomings of the prior art by providing a metal pipe furniture connecting assembly without requiring the screwing operation, so that the invention does not have to take the additional bag for containing the screw bolts into consideration, and the invention provides a convenient and time-saving assembling operation.

Another objective of the present invention is to provide a structural design, such that pipes and pipe joints can be rotably inserted in a simple and convenient manner.

A further objective of the present invention is to provide a structural design, such that pipes and pipe joints can be assembled without using any screw bolt, and thus there is no trace of screw bolts at all to enhance the overall appearance of the furniture.

To achieve the foregoing objectives, the structural design of the invention comprises: a long cylindrical peg disposed at the center of a pipe joint for installing a pipe into an insert groove; a rhombus sheathing hole disposed at a plug sleeve of a distal end of the pipe, and having a long diameter slightly larger than the diameter of the peg, and a short diameter slightly smaller than the diameter of the peg, wherein the plug sleeve penetrates through a cut slot at a position with respect to the long diameter of the sheathing hole, such that the plug sleeve has an appropriately sufficient moving space at a pressing plate extended along the direction of the short diameter; a latch slot concavely disposed on a side proximate to a distal end of the pipe for positioning the plug sleeve and the pipe, and concurrently having a function of controlling the rotation of the pipe by using a tool, so as to make the assembling operation of the pipe and the pipe joint easier, simpler and quicker without using any screw or bolt. Such arrangement not only provides a simpler and quicker operation, but also provides an aesthetic screwless appearance and gives valuable industrial applications and practical utilities.

To make it easier for our examiner to understand the objectives, characteristics and effects of the present invention, a preferred embodiment with accompanying drawings are used for a detailed description of the invention as follows.

### BRIEF DESCRIPTION OF THE DRAWINGS

Fig. 1 is a schematic view of an assembly in accordance with a preferred embodiment of the present invention,
Fig. 2 is an exploded view of a partial assembly in accordance with a preferred embodiment of the present invention:
Fig. 3 is a perspective view of a partial assembly in accordance with a preferred embodiment of the present invention;
Fig. 4 is a schematic view of relations of a partial assembly in accordance with a preferred embodiment of the present invention;
Fig. 5 is a schematic view of relations of a partial assembly which is not fixed into position yet in accordance with a preferred embodiment of the present invention;
Fig. 6 is a schematic view of relations of a partial assembly which has been fixed into position in accordance with a preferred embodiment or the present invention;
Fig. 7 is a schematic view of an assembly in accordance with another preferred embodiment of the present invention; and
Fig. 8 is a schematic view of an assembly with its door panel opened in accordance with another preferred embodiment of the present invention.

### DETAILED DESCRIPTION OF THE PREFERRED EMBODIMENTS

The structural assembly, technical measure and effect of the present invention become apparent with the detailed description of preferred embodiment and related drawings as follows:

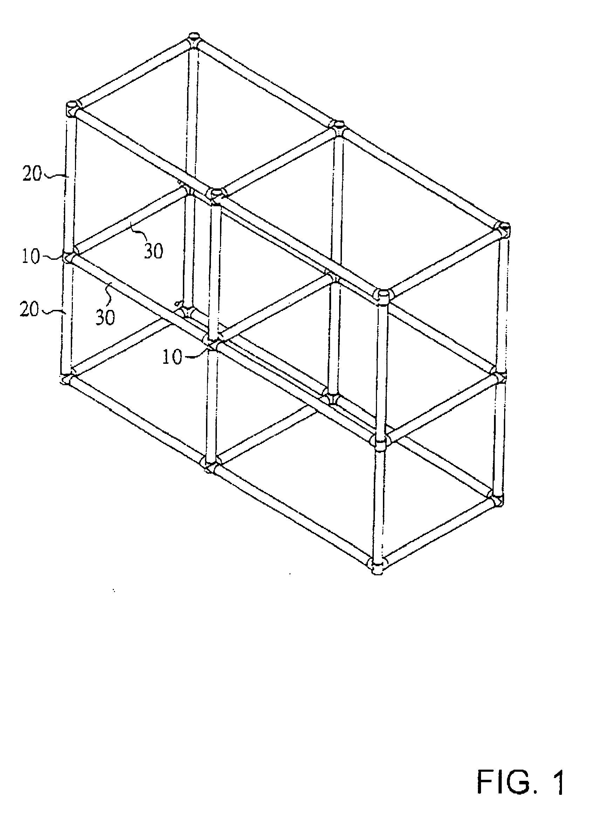

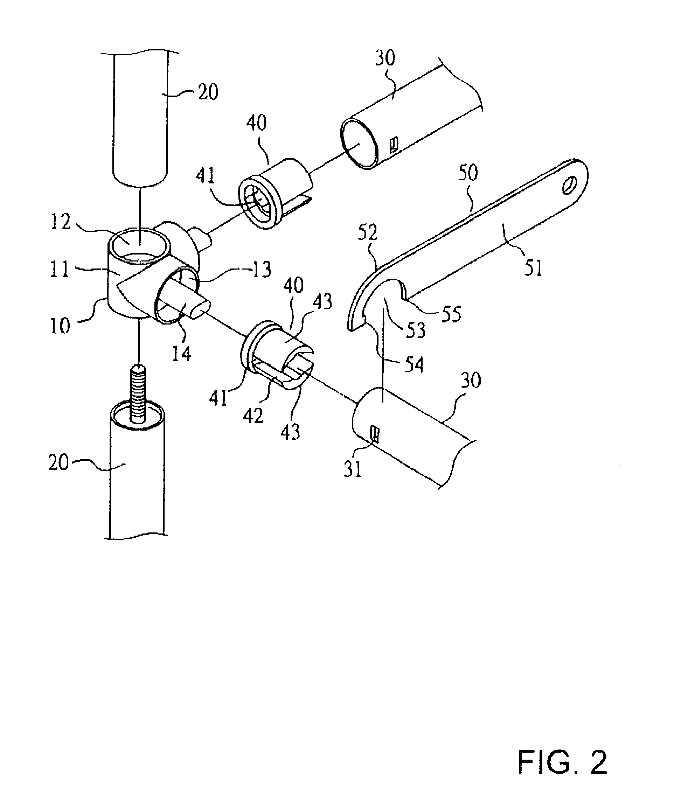

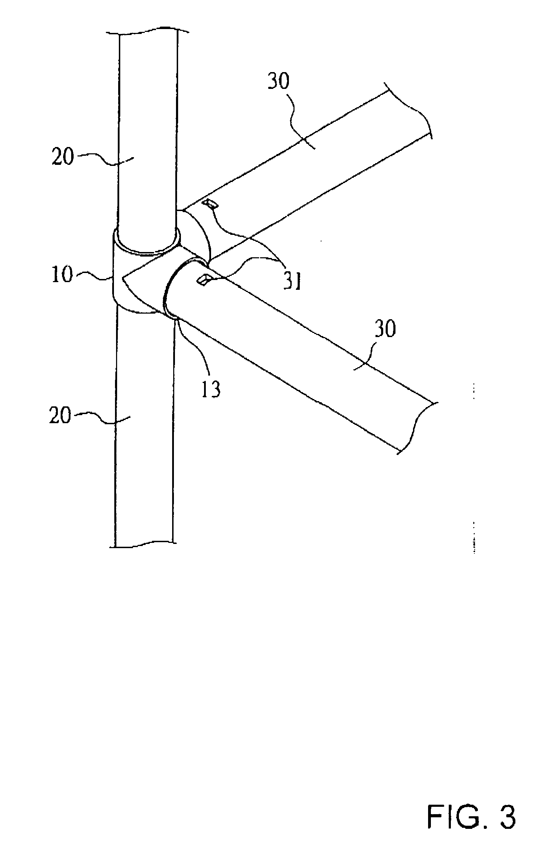

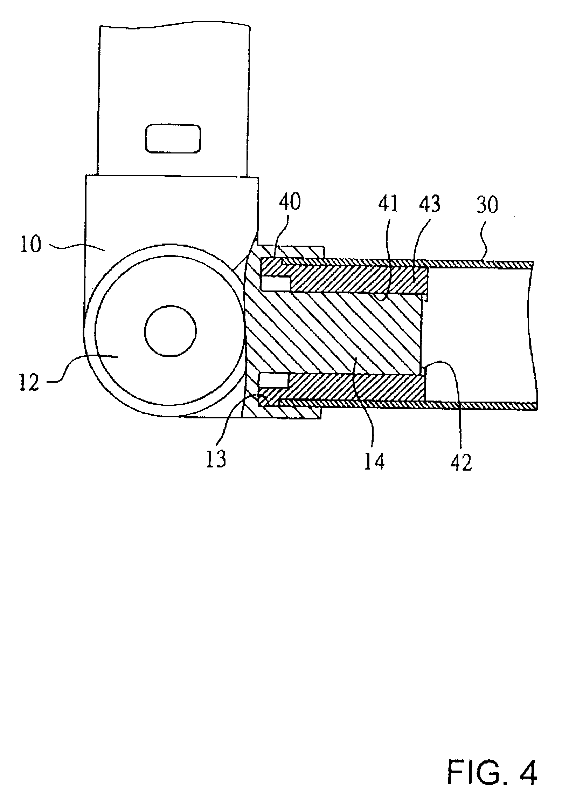

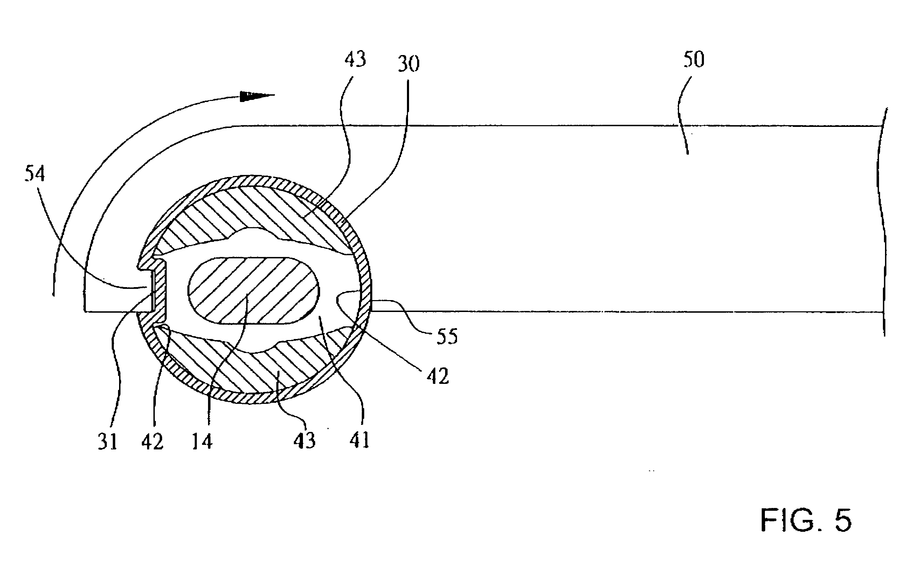

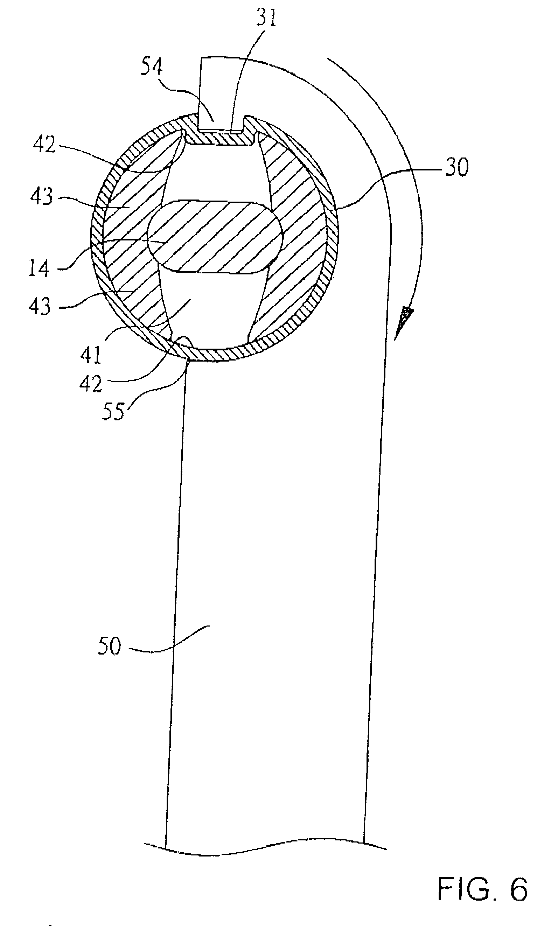

Referring to Figs. 1 to 3 for a schematic view an exploded view and a perspective view of an assembly and Figs. 4 to 6 for schematic views of relations of a partial assembly in accordance with a preferred embodiment of the present invention respectively, the structural design of a metal pipe furniture of the present invention primarily uses a pipe joint 10 as a component for connecting a support post 20 and a pipe 30 to complete a basic frame of the metal pipe furniture, and installs a shelf 21 or panel onto the basic frame to complete assembling a whole set of the metal pipe furniture.

The pipe joint 10 may be an L-shaped two-way or a T-shaped three-way joint according to its installation position, and its base 11 includes a longitudinal insert groove 12 disposed separately at upper and lower openings for connecting the support post 20, and a transversal insert groove 13 according to the requirement of installing the pipe 30, and each transversal insert groove 13 is disposed at a right angle. In the meantime, each transversal insert groove 13 includes a long cylindrical peg 14 at the middle of the transversal insert groove 13, and uses the peg 14 to achieve the effects of inserting and positioning the pipe 30.

The pipe 30 is a hollow pipe body with an appropriate length, and having a plug sleeve 40 disposed at a distal end of the pipe, and the plug sleeve 40 is preferably made by a plastic injection molding, and the middle of the plug sleeve 40 has a rhombus sheathing hole 41. such that the long diameter of the sheathing hole 41 is slightly larger than the diameter of the peg 14 of the pipe joint 10, and the short diameter of the sheathing hole 41 is slightly smaller than the diameter of the peg 14, and an interface of the long diameter and the short diameter of the sheathing hole 41 is aslant, and the plug sleeve 40 is penetrated through a cut slot 42 at a position corresponding to the direction of the long diameter of the sheathing hole 41, such that the pressing plate 43 extended along the direction of the short diameter of the plug sleeve 40 has an appropriate sufficient moving space. In the meantime, a latch slot 31 is concavely disposed on a lateral side proximate to a distal end of the pipe 30, and the internal convex shape of the latch slot 32 can embed the latch slot 32 into the cut slot 42 of the plug sleeve 40 when the plug sleeve 40 is sheathed onto a distal end of the pipe 3, so as to limit the position to maintain the sheathing relation between the plug sleeve 40 and the pipe 30 while achieving the link relation of the plug sleeve 40 and the pipe 30.

The pipe 30 includes a latch slot 31 disposed at a distal end of the pipe 30, for providing a function of turning or changing the direction of the pipe 30 and the plug sleeve 40 by using a tool 50, and the tool 50 includes a handle 51 provided for a hand to apply a force for turning the pipe 30, and another end of the handle 51 includes a latching portion 52 for clamping an clamp opening 53 of the pipe 30, and a lateral side of the clamp opening 53 includes a hook portion 54 for latching the latch slot 31 of the pipe 30, and another end of the clamp opening 53 includes a palate 55 for abutting an external edge surface of the pipe 30, such that the tool 50 can be used for clamping the pipe 30 to turn or change the direction of turning the pipe 30 easily.

With the foregoing structural design, an operator for assembling the pipe 30 and the pipe joint 10 in accordance with the preferred embodiment of the present invention simply needs to align the direction of the long diameter of the plug sleeve 40 of the pipe 30 with the peg 14 in the insert groove 13 of the pipe joint 10 for a direct insertion, and then uses the tool 50 to latch and turn the pipe 30, so that the plug sleeve 40 at a distal end of the pipe 30 can be turned accordingly to change the relative relation of the plug sleeve 40 and the peg 14, and the direction of the short diameter of the sheathing hole 41 of the plug sleeve 40 corresponds to the direction of the long diameter of the peg 14. With the design of the short diameter of the sheathing hole 41 of the plug sleeve 40 being slightly smaller than the diameter of the peg 14, the pressing plate 43 extended along the direction of the short diameter of the plug sleeve 40 is propped and supported by the peg 14 to extend outward slightly, for forming a fixing effect of the pressing plate 43 onto an internal wall of the pipe 30, so as to achieve a secured insertion and connection of the pipe 30 and the pipe joint 40 and provide a simple and easy rotating insertion to complete a quick installation of the pipe 30 and the pipe joint 10.

If it is necessary to disassemble the pipe 30 and the pipe joint 10, the operator simply needs to use a tool 50 to hold and turn the pipe 30, so as to drive the plug sleeve 40 sheathed onto a distal end of the pipe 30 to change the relative relation with the peg 14 of the pipe joint 10, so that the direction of the long diameter of the sheathing hole 41 of the plug sleeve 40 corresponds to the direction of the long diameter of the peg 14 for an easy separation of the pipe 30 from the insert groove 13 of the pipe joint 10 to complete disassembling the pipe 30 and the pipe joint 10 easily.

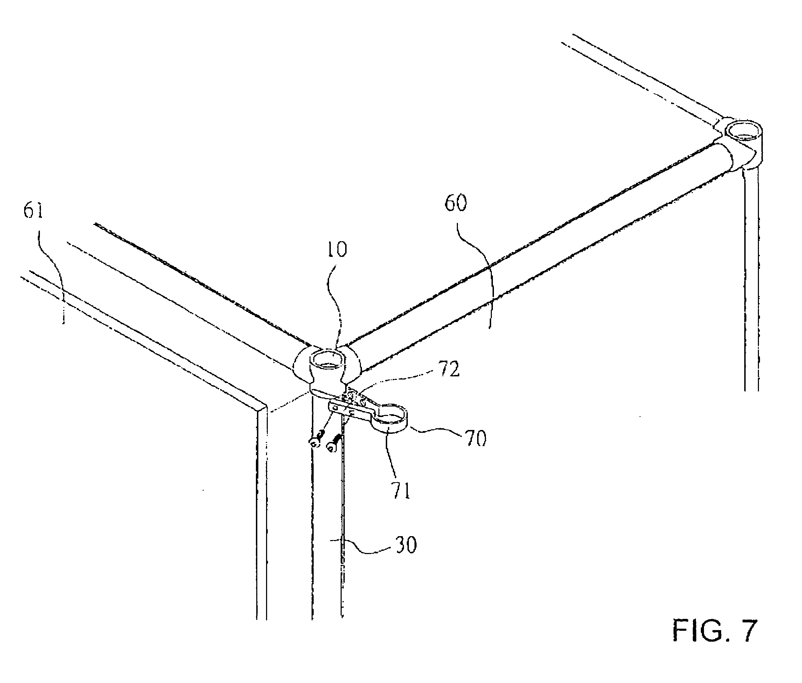

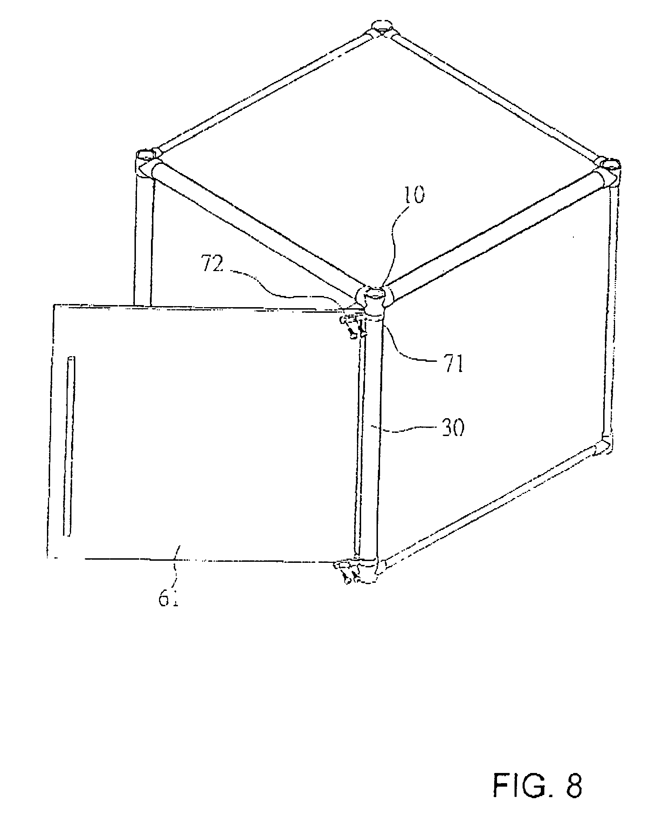

Referring to Figs. 7 and 8 for schematic views of an assembly in accordance with another preferred embodiment of the present invention, another pivotal clamp 70 is clamped to upper and lower ends of the pipe 30, such that the ring 71 and the pipe 30 at the rear end forms a movable pivotal axle after the pipe 30 and the pipe joint 10 together with each side panel 60 arc used for forming a cabinet, and the clamping plate 72 at the front end clamps and secure a door panel 61, so as to provide a Function of movably and pivotally opening the door panel 61 to facilitating an access of items in the furniture.

From the description above, the assembling of the pipes and the pipe joints of the metal pipe furniture in accordance with the present invention abandons the traditional fixation by screws or bolts, but adopts the long cylindrical peg inside its insert groove of the pipe joint to go with the sheathing hole and the plug sleeve sheathed at a distal end of the pipe, so that the pipe can he turned to change the relative relation of the sheathing hole of the plug sleeve and the peg, so as to determine whether to fix or release the connection relation of the pipe and the pipe joint for the assembling or disassembling of the furniture. In other words, regardless of the assembling or disassembling of the metal pipe furniture, the novel structural design of the invention can use a simple and easy rotating method to achieve the fixing or releasing relation to make the assembling or disassembling operation more convenient. Unlike the prior art that takes much time and effort for the bolt connecting structure and often encounters a shortage of accessory components, the invention is definitely useful in industrial application and practical utility.

In summation of the description above, the innovative design of the metal pipe furniture connecting assembly in accordance with the present invention inserts a long cylindrical peg of the insert groove of the pipe joint into the sheathing hole of the plug sleeve at a distal end of the pipe to provide a simple and easy rotating connection for a quick installation of the pipe and pipe joint, so as to overcome the problems and shortcomings of the prior art locking connection or bolt connection. Overall speaking, the invention is definitely useful for industrial application and practical utility, and is thus duly filed for patent application.

## Claims

1. A metal pipe furniture connecting assembly, using a pipe joint as a component for connecting a support post and a pipe for a design of assembling a support post and a pipe of a metal pipe furniture and completing a basic frame of the metal pipe furniture, and installing a shelf or a panel thereon to complete a whole set of the metal pipe furniture; **characterized in that**:
the pipe joints at their bases include a longitudinal insert groove for connecting a support post, and a transversal insert groove installed according to the requirements of the connected pipe, and each transversal insert groove includes a long cylindrical peg in the middle and uses the pegs for achieving the effects of inserting and positioning the pipes:
the pipes are hollow pipe bodies with an appropriate length, and having another plug sleeve fixed to a distal end of the pipe, such that the plug sleeve achieves the effect of integrally linking with the pipe, and the middle of the plug sleeves includes a rhombus sheathing hole, and the long diameter of the sheathing hole is slightly larger than the diameter of the pipe joint, and the short diameter of the sheathing hole is slightly smaller than the diameter of the peg, and an interface of the long diameter and the short diameter of the sheathing hole is aslant, and a cut slot is penetrated through the plug sleeve with respect to the sheathing hole along the direction of its long diameter, such that a pressing plate extended from the plug sleeve along the direction of its short diameter has an appropriately sufficient moving space;
such that an operator for installing the pipe and the pipe joint simply needs to align the pipe in the direction of the long diameter of plug sleeve towards the insert groove of the pipe joint and insert the peg directly, and then uses a tool to turn the pipe, so that the plug sleeve changes its relative relation with the peg, and
the peg produces a propping and pressing action to the pressing plate extended along the direction of the short diameter of the plug sleeve for constituting a positioning effect for the pressing plate onto an internal wall of the pipe, so as to achieve a simple and easy rotating insertion to complete assembling and fixing the pipe and the pipe joint.

2. The metal pipe furniture connecting assembly of claim 1, wherein the pipe includes a latch slot concavely disposed on a lateral side proximate to a distal end, and using an internal convex shape of the latch slot to embedded the latch slot into a cut slot of the plug sleeve when the plug sleeve is sheathed onto a distal end of the pipe, so as to maintain the sheathing relation of the plug sleeve and the pipe by a limit position, while achieving a link relation of the plug sleeve and the pipe provided for a tool to latch and turn the pipe.

3. The metal pipe furniture connecting assembly of claim 1 or 2, wherein the tool for turning the pipe comprises a handle applicable for a hand to apply a force to turn the handle, a latching portion disposed on another end of the handle, and having an clamp opening for clamping the pipe, a hook portion extended from a lateral side of the clamp opening and latched into the pipe latch slot, and a palate disposed at another end of the clamp opening for pressing against an external edge surface of the pipe, such that the tool can be used for clamping and holding the pipe to easily control the rotation and a change of its rotation easily.

4. The metal pipe furniture connecting assembly of claim 1, wherein the plug sleeve sheathed onto a distal end of the pipe is made by plastic injection molding.

5. The metal pipe furniture connecting assembly of claim 1, wherein the pipe joints are an L-shape two-way or T-shape three-way pipe joints according to their installation position.

6. The metal pipe furniture connecting assembly of claim 1. wherein the pipe uses the pivotal clamping plate sheathed onto upper and lower ends of the pipe for installing a door panel, and a rear end of the pivotal clamping plate has a return portion to achieve a sheathing and pivotal rotation relation with the pipe, and a clamping plate is extended from a front end of the pivotal clamping plate for clamping the door panel.
